# EUROPEAN PATENT APPLICATION

(11) **EP 4 535 330 A1**
(43) Date of publication of application: **09.04.2025**
(21) Application number: 23201517.2
(22) Date of filing: 04.10.2023
(51) Int. Cl.: G08G 1/0967, G05D 1/69, G08G 1/0968, G08G 1/16, G08G 1/00

(54) **SYSTEM AND METHOD OF CONTROLLING MOVEMENTS OF VEHICLES**

(71) Applicant: Volvo Autonomous Solutions AB, 405 08 Göteborg (SE)
(72) Inventor: FORCOLIN, Fabio, 416 73 GÖTEBORG (SE); ROGENFELT, Åsa, 41478 GÖTEBORG (SE)
(74) Representative: Kransell & Wennborg KB

(57) **Abstract**

The present disclosure relates to a computer system (100) for controlling movements of a plurality of vehicles (10a to 10n) in a confined geographical area (200), the computer system comprising processing circuitry (102) configured to: define at least one vehicle path (110) within the confined geographical area, the at least one vehicle path containing at least one vehicle zone (150), and further being delimited to a single vehicle lane (160); obtain real-time vehicle travelling profiles (180) of the plurality of vehicles intended to travel in the at least one vehicle zone; estimate, based on the obtained real-time vehicle travelling profiles, a possibility of having a set of vehicles among the plurality of vehicles accessing the at least one vehicle zone and travelling along the single vehicle lane at the same time; determine that the possibility satisfies a safety criterion; and feed motion commands to the set of vehicles for realizing their routes through the at least one vehicle zone together.

## Description

### TECHNICAL FIELD

The disclosure relates generally to the field of centralized vehicle control. In particular aspects, the disclosure relates to system and method of controlling movements of vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Autonomous vehicles have gained significant attention and investment in recent years as these vehicles offer the promise of increased safety, reduced traffic congestion, and improved transportation efficiency. Various sensors, cameras, and machine learning algorithms have been integrated into these vehicles to enable them to navigate roads, avoid obstacles, and follow traffic rules. However, controlling autonomous vehicles in geographical areas including one or more narrow passages, such as narrow bridges and narrow tunnels, poses some additional challenges that require further attention and new solutions. In such environments, the autonomous vehicles may need to adapt to even more dynamic conditions, including e.g. more demanding interaction with other adjacent vehicles so as to avoid collision.

Ensuring the safe and efficient operation of autonomous vehicles in such environments may thus necessitate further development of the control system for controlling such vehicles along their pathways.

### SUMMARY

According to a first aspect of the disclosure, there is provided a computer system for controlling movements of a plurality of vehicles in a confined geographical area. The computer system comprises processing circuitry configured to: define at least one vehicle path within the confined geographical area by a subset of static nodes. The subset of static nodes defines a topological representation of the at least one vehicle path. The at least one vehicle path contains at least one vehicle zone with an entrance and an exit, and further being delimited to a single vehicle lane; obtain real-time vehicle travelling profiles of the plurality of vehicles intended to travel in the at least one vehicle zone, the vehicle travelling profiles containing travelling data; estimate, based on the obtained real-time vehicle travelling profiles, a possibility of having a set of vehicles among the plurality of vehicles accessing the at least one vehicle zone and travelling along the single vehicle lane at the same time; determine that the possibility satisfies a safety criterion, so as to allow the set of vehicles to travel through the at least one vehicle zone together; and feed motion commands to the set of vehicles for realizing their routes through the at least one vehicle zone together.

The first aspect of the disclosure may seek to improve productivity for moving vehicles along a road segment with predefined narrow boundaries, such as narrow roads, bridges, and/or tunnels, and where there are few or no alternative routes for the vehicles. One example of such road segments may be a tunnel having a single vehicle lane. A technical benefit may include to provide a more efficient traffic planning operation of a number of vehicles in that the computer system is configured to determine whether or not a set of vehicles among a number of vehicles can be virtually coupled, which means that the set of vehicles can be viewed as "one vehicle" through the vehicle zone, i.e. the set of vehicles are capable of being controlled to move as one unit in terms of e.g. relative distance between each other and/or relative speed of the vehicles. By viewing several vehicles as "one unit", or as "one vehicle", through the vehicle zone, the amount of control input, or control commands, may also be reduced, thus further improving the traffic planning management of the vehicles within the confined geographical area. To this end, the proposed computer system provides for improving not only safety of the vehicles and the efficiency of the traffic planning, but may also positively contribute to improved sustainability and scalability. The computer system according to the first aspect of the disclosure thus provides for improved route planning. A particular objective is to propose an improved traffic planning for autonomous vehicles, such as autonomous trucks controllable from a cloud-based server or any local (on-site) device.

The control system may thus be configured to execute a number of operations (such as method steps) in order to increase productivity and/or to minimize the time it takes for the vehicles to execute their routes. Productivity can be quantified as the number of useful transport work per unit time and/or per vehicle.

As will be further described herein, the possibility of having a set of vehicles among the plurality of vehicles accessing the at least one vehicle zone and travelling along the single vehicle lane at the same time may generally include determining whether or not vehicles may occupy the same node at the same time. In addition, or alternatively, the possibility of having a set of vehicles among the plurality of vehicles accessing the at least one vehicle zone and travelling along the single vehicle lane at the same time may include any one of determining a risk of collision between the vehicles, e.g. a risk of a physical collision, as well as determining a risk of a so called deadlock.

Optionally in some examples, including in at least one preferred example, the provision estimate, based on the obtained real-time vehicle travelling profiles, a possibility of having a set of vehicles among the plurality of vehicles accessing the at least one vehicle zone and travelling along the single vehicle lane at the same time, may further comprise to identify one or more similarities between the vehicle travelling profiles of the set of vehicles, and determine that the possibility may satisfy a safety criterion further comprises to determine that the one or more similarities satisfies the safety criterion. A technical benefit may include to further improve the determination of which vehicles of the plurality of vehicles that can be moved together, i.e. to be viewed as one vehicle, in the vehicle zone along the single vehicle lane.

Optionally in some examples, including in at least one preferred example, the provision estimate, based on the obtained real-time vehicle travelling profiles, a possibility of having a set of vehicles among the plurality of vehicles accessing the at least one vehicle zone and travelling along the single vehicle lane at the same time, may further comprise to estimate whether a vehicle among the set of vehicles can travel between the entrance and exit of the vehicle zone without colliding with another vehicle among the plurality of vehicles planning to travel between the entrance and exit of the vehicle zone. A technical benefit may include to further improve traffic planning of the vehicle so as to determine a risk of collision, such as estimating a risk of a physical collision between two or more vehicles in the vehicle zone.

Optionally in some examples, including in at least one preferred example, the processing circuitry is further configured to determine, based on the obtained real-time vehicle travelling profiles, that the possibility dissatisfies the safety criterion. A technical benefit may include to improve the precision in determining which vehicles of the plurality of vehicles that can be moved together, i.e. to be viewed as one vehicle, in the vehicle zone along the single vehicle lane.

Optionally in some examples, including in at least one preferred example, the provision determine, based on the obtained real-time vehicle travelling profiles, that the possibility dissatisfies the safety criterion, further comprises to identify one or more differences between the vehicle travelling profiles of the set of vehicles and determine that the one or more differences dissatisfies the safety criterion. A technical benefit may include to further improve the precision in determining which vehicles of the plurality of vehicles that can be moved together, i.e. to be viewed as one vehicle, in the vehicle zone along the single vehicle lane.

Optionally in some examples, including in at least one preferred example, if the possibility dissatisfies the safety criterion, the processing circuitry is further configured to estimate if one or more vehicle travelling profiles can be adjusted to satisfy the safety criterion. A technical benefit may include to provide an even more improved control of the movements of the vehicles in terms of adaptability and productivity.

Optionally in some examples, including in at least one preferred example, if the possibility satisfies the safety criterion, the processing circuitry is further configured to compare the vehicle travelling profiles to identify possibilities for coupling at least two adjacent vehicles to each other to form a vehicle coupled combination; and feeding motion commands to the adjacent vehicles for realizing their routes through the at least one vehicle zone together, the feeding motion commands further comprising commands for connecting the adjacent vehicles to form the vehicle coupled combination before entering the at least one vehicle zone. A technical benefit may include to identify vehicles that can be physically connected to each other, such as one or more trucks and/or so-called dolly vehicle units.

Optionally in some examples, including in at least one preferred example, if the possibility satisfies the safety criterion, the processing circuitry is further configured to compare the vehicle travelling profiles to identify possibilities for operating at least the set of vehicles in a coordinated manner forming a vehicle platooning arrangement; and feeding motion commands to the set of vehicles for realizing their routes through the at least one vehicle zone together, the feeding motion commands further comprising commands for coordinating the set of vehicles to form the vehicle platooning arrangement before entering the at least one vehicle zone.

Optionally in some examples, including in at least one preferred example, if the possibility satisfies the safety criterion, the processing circuitry is further configured to compare the vehicle travelling profiles to identify possibilities for operating at least the set of vehicles in a coordinated manner forming a vehicle convey arrangement; and feeding motion commands to the set of vehicles for realizing their routes through the at least one vehicle zone together, the feeding motion commands further comprising commands for coordinating the set of vehicles to form the vehicle convey arrangement before entering the at least one vehicle zone.

Optionally in some examples, including in at least one preferred example, the vehicle travelling profiles comprise travelling data in the form of any one of driving directions of the plurality of vehicles, scheduled routes of the plurality of vehicles, distance between the plurality of vehicles, relative time gaps between the plurality of vehicles, relative speed between the plurality of vehicles, speed differences between the plurality of vehicles, relative acceleration between the plurality of vehicles, planned activities by the plurality of vehicles within the at least one vehicle zone unit, such as loading/unloading events. In this manner, there is provided a number of data to be used as control input to the computer system.

Each one of the vehicle travelling profile may comprise travelling data containing any one of vehicle position, vehicle speed, destination data, vehicle acceleration, planned activities within the at least one vehicle zone, etc.

Optionally in some examples, including in at least one preferred example, the vehicle path within the confined geographical area is defined by a subset of static nodes using a route optimizing algorithms. A technical benefit may include to improve the computational efficiency and precision of the computer system.

Optionally in some examples, including in at least one preferred example, the route optimizing algorithms is any one of a Djikstra's algorithm and A*. A technical benefit may include to further improve the computational efficiency and precision of the computer system.

The safety criterion may be any one of the following: the set of vehicles travels in the same direction, an estimated speed difference between the set of vehicles is within a predetermined speed range, an estimated relative speed between the set of vehicles is within a predetermined range, an estimated relative acceleration between the vehicles is within a predetermined acceleration range, an estimated relative distance between the set of vehicles is within a predetermined distance range, an estimated time gap between the set of vehicles is within a predetermined time period, and an estimated time to collision between the set of vehicles is within a predetermined time period.

According to a second aspect of the disclosure, there is provided a vehicle comprising the computer system of the first aspect.

According to a third aspect of the disclosure, there is provided a computer-implemented method for controlling movements of a plurality of vehicles in a confined geographical area, the computer-implemented method comprising: defining, by processing circuitry of a computer system, at least one vehicle path within the confined geographical area by a subset of static nodes, wherein the subset of static nodes defines a topological representation of the at least one vehicle path, the at least one vehicle path containing at least one vehicle zone with an entrance and an exit, and further being delimited to a single vehicle lane; obtaining real-time vehicle travelling profiles of the plurality of vehicles intended to travel in the at least one vehicle zone, the vehicle travelling profiles containing travelling data; estimating, based on the obtained real-time vehicle travelling profiles, a possibility of having a set of vehicles among the plurality of vehicles accessing the at least one vehicle zone and travelling along the single vehicle lane at the same time; determining that the possibility satisfies a safety criterion, so as to allow the set of vehicles to travel through the at least one vehicle zone together; and feeding motion commands to the set of vehicles for realizing their routes through the at least one vehicle zone together.

The third aspect of the disclosure may seek to how to improve productivity for moving vehicles along a road segment with predefined narrow boundaries, such as narrow roads, and where there are few or no alternative routes for the vehicles. One example of such road segment may be a tunnel having a single lane. A technical benefit may include to provide a more efficient traffic planning operation of a number of vehicles in that the computer system determines whether or not a set of vehicles among the number of vehicles can be viewed as one vehicle through the vehicle zone. By viewing several vehicles as one vehicle through the vehicle zone, the control input, or control commands, may also be reduced, thus further improving the traffic planning management of the vehicles within the confined geographical area. The computer system according to the first aspect of the disclosure thus provides for improved route planning. A particular objective is to propose an improved traffic planning for autonomous vehicles, such as autonomous trucks controllable from a cloud-based server or any local (on-site) device.

Optionally in some examples, including in at least one preferred example, the provision of estimating a possibility of having a set of vehicles among the plurality of vehicles accessing the at least one vehicle zone and travelling along the single vehicle lane at the same time, further comprises identifying one or more similarities between the vehicle travelling profiles of the set of vehicles, and wherein determining that the possibility satisfies a safety criterion further comprises determining that the one or more similarities satisfies the safety criterion.

Optionally in some examples, including in at least one preferred example, the provision of estimating a possibility of having a set of vehicles among the plurality of vehicles accessing the at least one vehicle zone and travelling along the single vehicle lane at the same time, further comprises estimating whether a vehicle among the set of vehicles can travel between the entrance and exit of the vehicle zone without colliding with another vehicle among the plurality of vehicles planning to travel between the entrance and exit of the vehicle zone.

Optionally in some examples, including in at least one preferred example, the method further comprises determining, based on the obtained real-time vehicle travelling profiles, that the possibility dissatisfies the safety criterion.

Optionally in some examples, including in at least one preferred example, the provision of determining that the possibility dissatisfies the safety criterion, further comprises identifying one or more differences between the vehicle travelling profiles of the set of vehicles and further determining that the one or more differences dissatisfies the safety criterion.

Optionally in some examples, including in at least one preferred example, if the possibility dissatisfies the safety criterion, the method further comprising estimating if one or more vehicle travelling profiles can be adjusted to satisfy the safety criterion.

According to a fourth aspect of the disclosure, there is provided a computer program product comprising program code for performing, when executed by the processing circuitry comprised in the computer system of the first aspect, the method of the second aspect.

According to a fifth aspect of the disclosure, there is provided a non-transitory computer-readable storage medium comprising instructions, which when executed by the processing circuitry of the first aspect, cause the processing circuitry to perform the method of the second aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIGS. 1A to 1C** illustrate an exemplary view of a number of vehicles travelling within a confined geographical area and a computer system comprising processing circuitry configured to control movement of the vehicles within the confined geographical area according to an example.
**FIGS. 2A to 2D**, 3A to 3D, and 4A to 4E illustrate another exemplary views of a number of vehicles travelling within a confined geographical area and a computer system comprising processing circuitry configured to control movement of the vehicles within the confined geographical area according to examples.
**FIG. 5A** is a flow chart of an exemplary method to control a plurality of vehicles according to an example.
**FIG. 5B** is a flow chart of an exemplary method to control a plurality of vehicles according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure is at least partly based on the realization that controlling and moving vehicles on a road may still be challenging in terms of planning and execution. In addition, there is an increased demand for ensuring a relatively high level of productivity. By way of example, dynamic movement of other vehicles within the same area may generally affect the time for transportation of goods between a departure position and a destination position as well as increasing the demands for controlling the vehicles in a safe manner, e.g. without increasing the risk of collision. As such, the transportation of goods by vehicle(s) from one position to another position is still difficult. One type of transportation by vehicles relates to transportation of goods by one or more autonomous vehicles, such as autonomous trucks. For example, in advanced driver assistance systems for autonomous vehicles, the selection of a driving strategy for intelligent connected vehicles may often need to take into consideration motion behaviors of other vehicles, including e.g. speed differences, transportation directions, lane changing and lane keeping of the other vehicles, where the lane changing of the vehicles may not only pose a threat to road traffic safety, but also affect the transportation as such in term of efficiency.

For these and other reasons, there is still a need for improving traffic planning of vehicles as well as controlling movement of vehicles, e.g. between a starting point (departure position) and an end point (such as destination positions) within a confined geographical area.

To remedy this, the present disclosure provides systems and methods for controlling movements of a plurality of vehicles in a confined geographical area in an improved manner. The disclosure may seek to improve productivity for moving vehicles along a road segment with predefined narrow boundaries, such as narrow roads, bridges, and/or tunnels, and where there are few or no alternative routes for the vehicles. One example of such road segments may be a tunnel having a single vehicle lane. A technical benefit may include to provide a more efficient traffic planning operation of a number of vehicles in that the computer system is configured to determine whether or not a set of vehicles among a number of vehicles can be viewed as "one vehicle" through the vehicle zone, i.e. the set of vehicles are capable of being controlled to move as one unit in terms of relative distance between each other and/or relative speed. By viewing several vehicles as "one unit", or as "one vehicle", through the vehicle zone, the amount of control input, or control commands, may also be reduced, thus further improving the traffic planning management of the vehicles within the confined geographical area. To this end, the proposed computer system provides for improving not only safety of the vehicles and the efficiency of the traffic planning, but may also positively contribute to improved sustainability and scalability. The computer system according to the first aspect of the disclosure thus provides for improved route planning. A particular objective is to propose an improved traffic planning for autonomous vehicles, such as autonomous trucks controllable from a cloud-based server or any local (on-site) device.

The vehicles may be any type of vehicle suitable for transporting goods, such as bulk material from one location to another. For example, the vehicle may be an excavator, loader, articulated hauler, dump truck, truck or any other suitable vehicle known in the art. In some embodiments, the vehicle may be driven by an operator. In other embodiments, the vehicle may be an autonomous vehicle that is controlled by a vehicle motion management (VMM) unit configured to individually control vehicle units and/or vehicle axles and/or wheels of the vehicle. For ease of reference, the following description refers to vehicles in the form of autonomous vehicles, in particular autonomous trucks.

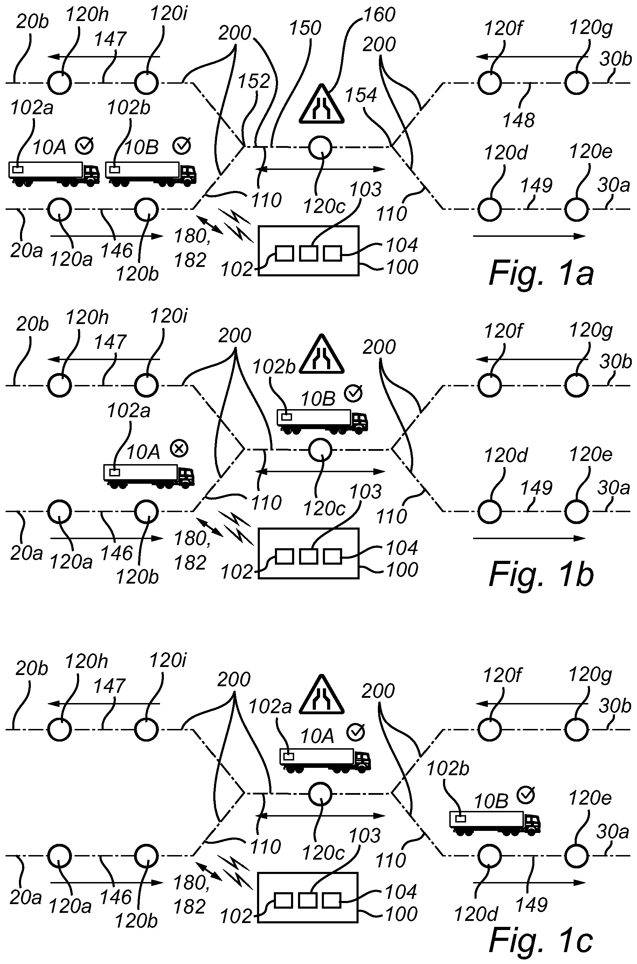

FIGS. 1A to 1C are views of a substantially flat trafficable environment illustrating a defined geographical area 200, in which a plurality of vehicles 10a, 10b move along a common predefined route that connects one or more departure positions, e.g. loading stations 20a, 20b, and destination positions, e.g. chutes 30a, 30b, via at least one vehicle path 110. The vehicle path 110 here contains a number of road segments, defining a number of vehicles zones 146, 147, 148, 149 and 150. In FIGS 1A to 1C, vehicle path 110 contains at least the vehicles zones 146, 149 and 150. In other examples, the vehicle path 110 contains a number of different the vehicles zones or a combination of the vehicle zones 146-150. In other examples, the defined geographical area 200 contains a plurality of vehicle pats being defined by a number of vehicle zones.

Hence, the at least one vehicle path 110 contains at least one vehicle zone 150. The at least one vehicle zone 150 may e.g. be narrow tunnel, a narrow bridge or the like. The at least one vehicle zone 150 thus has an entrance 152 and an exit 154. It should be readily appreciated that the terms entrance and exit are used to denote access points for a vehicle to the vehicle zone 150, and that an entrance position for a first vehicle travelling in a first direction may likewise be an exit position for another vehicle travelling in a second direction, the second direction being an opposite direction to the first direction. Hence, the entrance and the exist can be different or same for different vehicles depending on their driving direction.

Moreover, as illustrated in FIGS. 1A to 1C, the at least one vehicle zone 150 is delimited to a single vehicle lane 160. A single vehicle lane 160 here refers to a road segment where two vehicles cannot meet without colliding with each other, or at least a road segment where two vehicles cannot move on as planned without having a negative impact on each other's intended routes (i.e. as compared to a road segment without any other vehicles on the road). A single lane may also, or alternatively, refer to a road segment where there is no possibility for any overtaking. As such, a single vehicle lane can generally be occupied by at most one vehicle at a time. In a single vehicle lane there is only one lane available with no alternative routes for the set of vehicles. Examples of such single vehicle lane can be found in narrow tunnels, narrow bridges, narrow roads or similar, where there is only one available path for the vehicle.

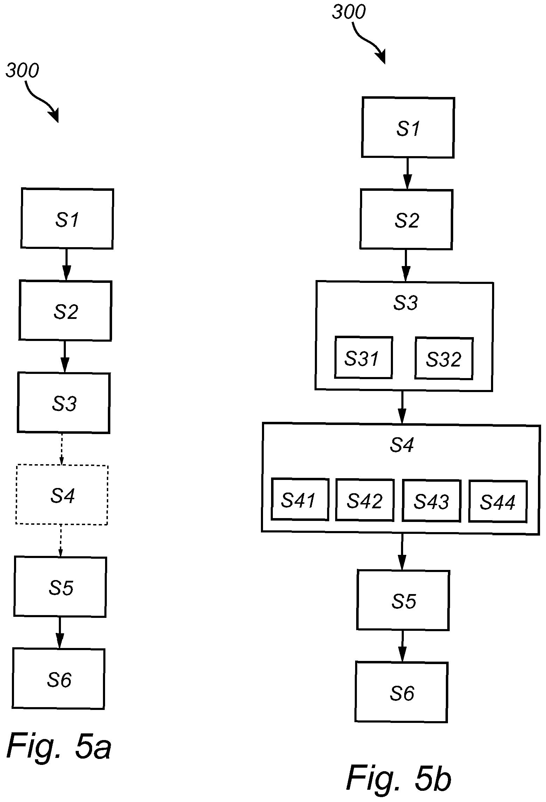

The vehicles 10a, 10b in FIGS. 1A and 1C are operated under the control of a computer system 100. The computer system 100 is here a traffic planner, or at least an integral part of a traffic planner. The computer system 100 here comprises a memory 103 and processing circuitry 102 configured to perform a vehicle movement control method, as will be further described in e.g. FIGS. 5A and 5B. The computer system 100 optionally also comprises a wireless interface 104 suitable to communicate wirelessly with analogous interfaces (not shown) in the vehicles 10a, 10b. The communication may proceed over a local-area or wide-area wireless network, which may be of the cellular or non-cellular type. In the downlink direction, the wireless communication from the computer system 100 to the vehicles 10a, 10b may comprise motion commands for causing the vehicles 10a, 10b to realize the common predefined route, as provided and scheduled by the vehicle movement control method.

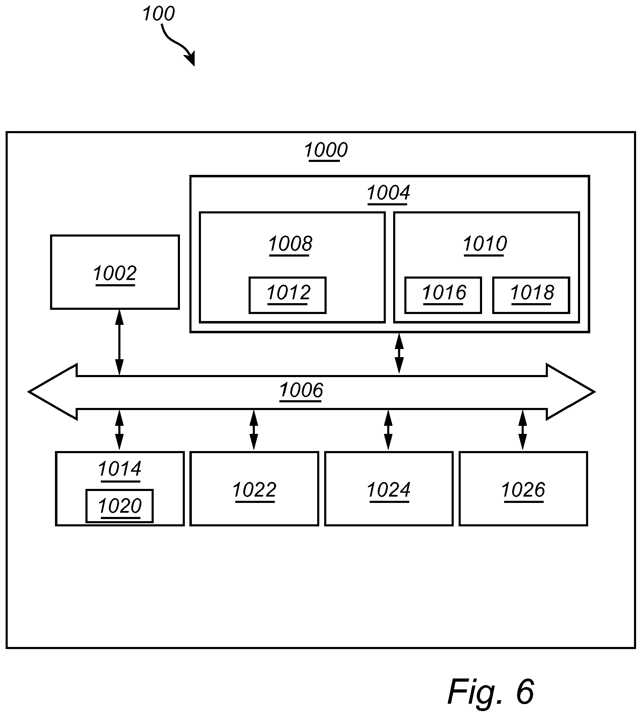

In the uplink direction, the vehicles 10a, 10b may transmit status indications (e.g., position, heading, technical conditions, emergencies) as well as acknowledgements that specific motion commands have been carried out. In some embodiments, the computer system 100 is not an endpoint in the wireless communication with the vehicles 10a, 10b, but the wireless communication passes via one or more intermediate devices, such as a base station in a cellular radio access network. In such embodiments, it may be considered that the computer system 100 is implemented in a distributed fashion, with the processing circuitry 102 and wireless interface 104 located in different physical devices. Further details on the computer system and the processing circuitry are described below in relation to FIG. 6.

The computer system 100 and the processing circuitry 102 may in one example be part of a cloud server. In other examples, the computer system 100 and the processing circuitry 102 may be integral parts of the vehicles 10a to 10n, where each one of the vehicles may contain corresponding processing circuitry forming part of the computer system. In other examples, the computer system and processing circuitry may be a combination of a cloud server and hardware architecture integrated in the vehicles.

The confined geographical area 200 in FIGS. 1A to 1C can be modeled as a set of planning nodes. In particular, the confined geographical area 200 in FIGS. 1A to 1C is defined by a subset of static nodes 120a - 120n. The subset of static nodes 120a - 120n defines a topological representation of the at least one vehicle path 110. As illustrated in e.g. Fig. 1A, the vehicle path 110 extends between various departure positions and destination positions 20a, 20b, 30a, 30b, and here also comprises a number of vehicle zones 146 to 150, In other words, the defined geographical area 200 includes one or more road segments and/or vehicle zones, such as the vehicle zone 150.

As such, the vehicle path 110 and the vehicle zones 146 to 150 are predefined road segments of the defined geographical area 200, i.e. the vehicle path 110 and the vehicle zones 146 to 150 are recorded in advance and used as a route to be followed by the vehicles 10a to 10n.

To this end, the static nodes 120a - 120n are provided to define the pathways for the vehicles. The static nodes may or may not overlap with each other.

A static node may for example also be an intersection, a road segment, a waypoint, a maintenance or replenishment position. Conceivably, the loading station, the tunnel, the chute, as well as vehicle zones and road segments connecting these, could be represented in the control system 100 as a set of static nodes. In FIGS. 1A to 1C, one example of a distribution of the set of static nodes 120a - 120n is illustrated. The vehicle path 110 can be defined in several different manners. By way of example, the vehicle path 110 within the confined geographical area is defined by the subset of static nodes using a route optimizing algorithms. The route optimizing algorithms is any one of a Djikstra's algorithm and A*. Applying any of these algorithms belongs to common general knowledge and is thus not to be further described herein. Other route optimizing algorithms may also be used. The route optimizing algorithms is generally applied when finding the optimal route for a vehicle to traverse from the nodes, such as from the static node 120a to the static node 120e, or between any other nodes.

By way of example, the route optimizing algorithms, such as the Djikstra's algorithm or the A* algorithm) selects the best path among all possible paths.

Information describing the static nodes and their topology is available to the control system 100, as are data about route segments, e.g. the two route segments, e.g. 146 and 150, as well as data about the vehicles 10a to 10n which are to move between the static nodes 120a - 120n. The route segments 146, 150 intersect at the static nodes 120b and 120c. In the present example, the control system 100 may further has at its disposal topographical information about the static nodes in the form of contour lines from which the elevation difference between each pair of nodes can be derived.

Generally, a vehicle occupies at least one node in the shared set of static nodes 120a - 120n and is movable to other nodes along road segments between pairs of the nodes.

FIGS. 1A to 1C illustrate a certain number of static nodes 120a to 120i, however, any number of static nodes can be used to define one or more vehicle paths, such as the vehicle path 110.

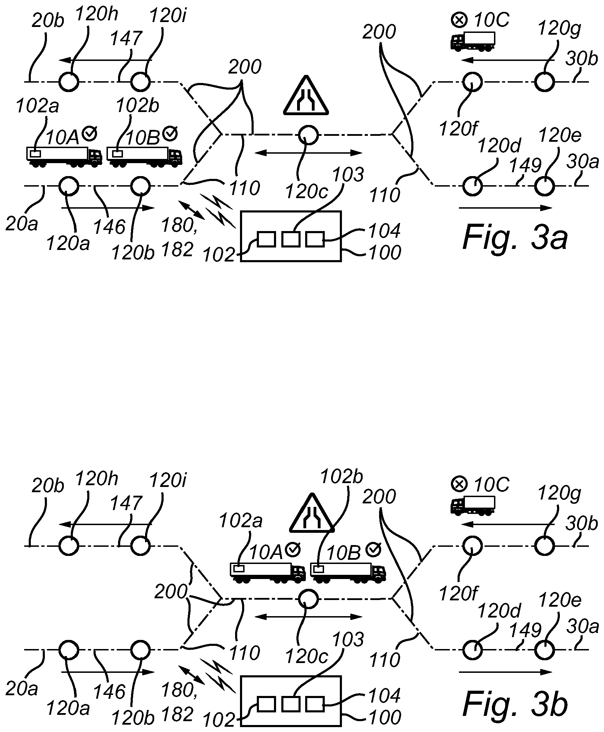

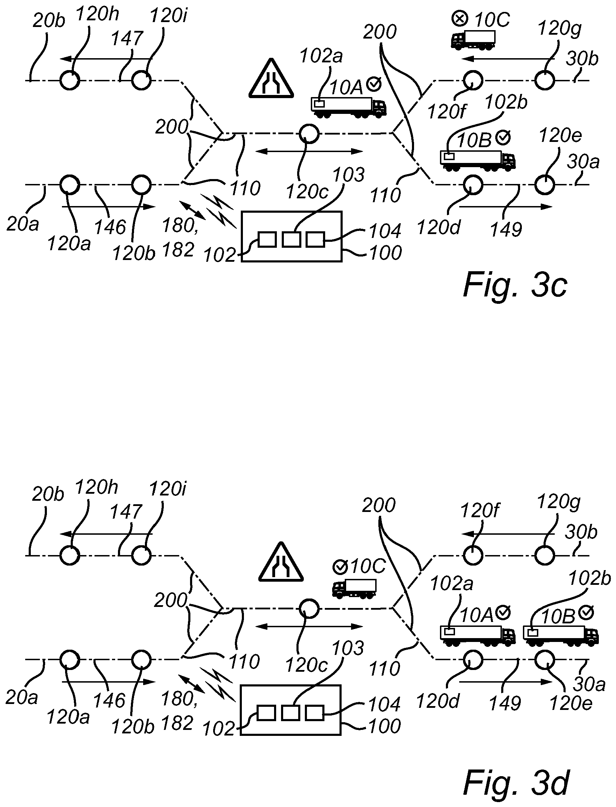

Turning again to FIGS. 1A to 1C, in particular FIG. 1A, there is illustrated a computer system 100 for controlling movements of a plurality of vehicles. In FIGS. 1A to 1C, the plurality of vehicles is illustrated as two vehicles 10a and 10b. However, as will be further illustrated in other examples, e.g. in FIGS. 3A to 3D, the number of vehicles may vary depending on situation. The plurality of vehicle can be three vehicles, four vehicles and even more vehicles. Hence, the computer system 100 is configured to control movement of any numbers of vehicles 10a to 10n.

In particular, the computer system 100 is configured to control movements of the vehicles 10a to 10n in the confined geographical area 200. Moreover, the computer system 100 comprises the processing circuitry 102. The processing circuitry 102 is configured to define the at least one vehicle path 110 within the confined geographical area 200.

The processing circuitry 102 is also configured to define at least one vehicle path 110 within the confined geographical area 200 by the subset of static nodes 120a - 120n.

The subset of static nodes 120a - 120n defines the topological representation of the at least one vehicle path 110. The at least one vehicle path 110 contains at least one vehicle zone 150. The at least one vehicle zone 150 has the entrance 152 and the exit 154. Moreover, the at least one vehicle zone 150 is delimited to the single vehicle lane 160.

The processing circuitry 102 is further configured obtain real-time vehicle travelling profiles 180 of the plurality of vehicles 10a to 10n intended to travel in the at least one vehicle zone 150. Hence, the control system 100 is configured to acquire various vehicle data from, and about, each vehicle in the confined geographical area 200.

The vehicle travelling profiles 180 contains travelling data 180, 182. The vehicle travelling profiles 180 can contain several different types of data. By way of example, the vehicle travelling profiles 180 comprises travelling data in the form of any one of driving directions of the adjacent vehicles, scheduled routes of the adjacent vehicles, distance between the adjacent vehicles, time between the adjacent vehicle, speed profile of the adjacent vehicles, planned activities within the at least one vehicle zone unit, such as loading/unloading events.

The travelling data is obtained from the plurality of the vehicles 10a, 10b etc. Hence, each one of the vehicles 10a, 10b comprises a corresponding processing circuitry 102a, 102b configured to send travelling data related to the operation of vehicle. The corresponding processing circuitry 102a, 102b of the vehicle is also configured to receive data from the processing circuitry 102 so as to update one or more parameters in the vehicle travelling profile, such as the speed of the vehicle.

Furthermore, the processing circuitry 102 is configured to estimate a possibility of having a set of vehicles 10a, 10b among the plurality of vehicles 10a to 10n accessing the at least one vehicle zone 150 and travelling along the single vehicle lane 160 at the same time. That is, the processing circuitry 102 is configured to estimate, based on the obtained real-time vehicle travelling profiles 180, a possibility of having a set of vehicles 10a, 10b among the plurality of vehicles 10a to 10n accessing the at least one vehicle zone 150 and travelling along the single vehicle lane 160 at the same time.

Hereby, the processing circuitry 102 is configured to estimate a possibility of allowing the set of vehicles 10a, 10b among the plurality of vehicles 10a to 10n to access the at least one vehicle zone and travel along the single vehicle lane at the same time.

In this context, the term "at the same time" here refers to an occasion where the set of vehicles occupy the same node at the same time. Hence, the possibility of having a set of vehicles 10, 10b among the plurality of vehicles 10a to 10n accessing the at least one vehicle zone 150 and travelling along the single vehicle lane 160 at the same time here includes that the processing circuitry determines whether or not vehicles may occupy the same node at the same time.

The processing circuitry 102 is also configured to determine that the possibility satisfies a safety criterion, so as to allow the set of vehicles 10a, 10b to travel through the at least one vehicle zone 150 together.

It should be noted that the vehicles may generally not be physically coupled to each other (as in physically joined together). Rather, the vehicle will be controlled together so as to be virtually coupled for the planning software point of view, and for the movement of the vehicles. However, in other examples (not illustrated), the vehicles may be physically coupled to each other for movement through the at least one vehicle zone 150.

In addition, the processing circuitry 102 is configured to feed motion commands to the set of vehicles 10a, 10b for realizing their routes through the at least one vehicle zone 150 together.

Thus, while again referring to FIGS. 1A to 1C, the vehicles 10a, 10b are in FIG. 1A in vehicle zone 146. At this point, the processing circuitry 102 of the computer system 100 obtains real-time vehicle travelling profiles 180, 182 from at least the two vehicles 10a and 10b, which have received transportation missions to move from the departure position 20a to the destination position 30a. In other words, the vehicles 10a, 10b both need to travel in the at least one vehicle zone 150 and through the single vehicle lane 160.

Ahead of the entrance to the at least one vehicle zone 150, the processing circuitry 102 of the computer system 100 estimate a possibility of having the vehicles 10a, 10b accessing the at least one vehicle zone 150 and travelling along the single vehicle lane 160 at the same time. In this context, the "same time" condition generally refers to a condition that the set of vehicles should be able to move or stand-still in the vehicle zone 150 during a given point of time or during a limited time period. That is, based on the obtained real-time vehicle travelling profiles, the processing circuitry 102 estimates a possibility of having the vehicles 10a, 10b to access the at least one vehicle zone 150 and then travel along the single vehicle lane 160 at the same time without causing any negative incidents or implications on each other's movements within the vehicle zone 150. Such incidents may refer to potential incidents having a negative impact on the productivity and efficiency of the movements of the vehicles, which include, but not restricted to physical collisions between the vehicles 10a, 10b. Rather, it may be sufficient that there is a risk of a so called deadlock. By way of example, it may be sufficient that there is a risk that two vehicles driving in opposite directions will occupy the same static node at the same time.

By estimating the above possibility, it becomes possible to control movement of the vehicles in the vehicle zone 150 in a more efficient and safe manner.

Moreover, ahead of the entrance to the at least one vehicle zone 150, the processing circuitry 102 of the computer system 100 determines whether or not the possibility satisfies a safety criterion. If the possibility is determined to be satisfied, i.e. meet the safety criterion, the vehicles 10a, 10b are allowed to travel through the at least one vehicle zone 150 together.

In this manner, it becomes possible to reduce the time in the single vehicle lane 160, which may generally also mean that the time the vehicles stand still is reduced. This will contribute to an overall increase in productivity.

Then, if the possibility satisfies the safety criterion, the processing circuitry 102 of the computer system 100 feed relevant motion commands to the vehicle 10a, 10b.

Turning again to FIGS. 1A to 1C, it can be concluded from e.g. FIG. 1B that the processing circuitry 102 of the computer system 100 has determined that the possibility dissatisfies the safety criterion. In this situation, the processing circuitry 102 of the computer system 100 feeds motion commands to the vehicles 10a, 10b to move in the single vehicle lane 160 one by one, i.e. not together at the same time, which is illustrated in FIGS. 1B and 1C.

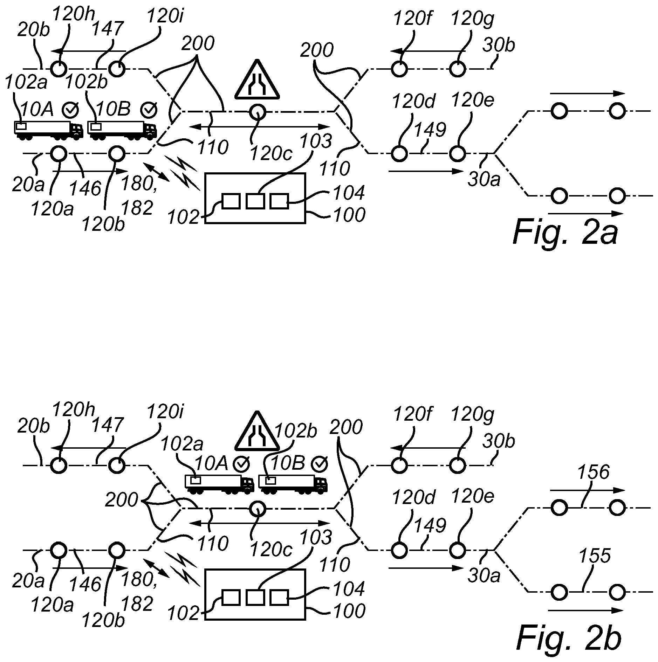

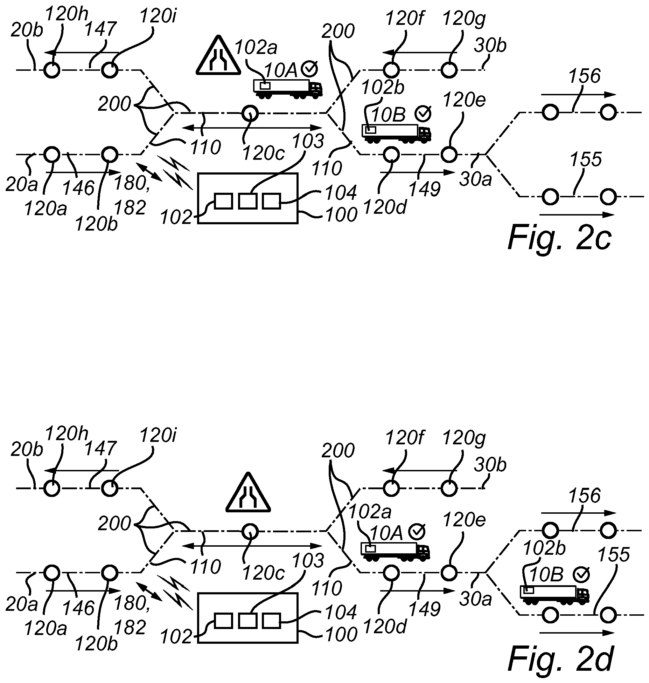

On the other hand, as illustrated by the example in FIGS 2A to 2D, if the processing circuitry 102 of the computer system 100 determines that the possibility satisfies the safety criterion, the processing circuitry 102 feeds motion commands to the vehicles 10a, 10b for realizing their routes through the at least one vehicle zone 150 and through the single vehicle lane 160 together (as illustrated in FIG. 2B). Then, as illustrated in FIG. 2C, the vehicles 10a and 10b again moves separately, i.e. one at a time thought the vehicle zone 149 as well as through the vehicle zone 155 until the vehicles 10a, 10b reach the destination position 30a.

In this example, the processing circuitry 102 estimates the possibility of having the vehicles 10a, 10b accessing the at least one vehicle zone 150 and travelling along the single vehicle lane 160 by identifying one or more similarities between the vehicle travelling profiles 180, 182 of the vehicles 10a, 10b. For instance, the processing circuitry 102 determines that the possibility satisfies the safety criterion if the vehicles 10a, 10b travel in the same direction and if the vehicles 10a, 10b travel with a relative speed difference to each other that does not exceed a predetermined speed difference. Other parameters may also be included in determining whether the safety criterion is satisfied or not, such as scheduled routes of the vehicles, distance between the vehicles, distance of the single vehicle lane 160, time between the vehicles, speed profile of the vehicles.

In one example, the processing circuitry 102 determines that the possibility satisfies the safety criterion if the vehicles 10a, 10b travel in the same direction and if the vehicles 10a, 10b are located sufficiently closed to each other.

It should be noted that the processing circuitry 102 is here also configured to determine the current vehicle position of each one of the vehicles 10a to 10n. The vehicle position is part of the data making of the vehicle profile of a given vehicle.

Some examples of acceptable similarities may be any one of the following conditions: the vehicles have the same direction along the single vehicle lane 160, the vehicles are planned to travel through a common set of vehicle zones, the vehicles are planned to travel to the same destination position, the distance and/or time between the vehicles meet a threshold value. The threshold value can be set to include a certain level that is defined based on the length of the vehicle zone 150, the vehicle speeds of the vehicles, and the time difference between the vehicles.

Another similarity can be that when a vehicle is following another vehicle, the speed profile of the vehicle behind should be bigger or equal to the one in the front, meaning that if the first vehicle has a faster speed profile than the second vehicle, the estimated possibility of moving the vehicle in the vehicle zone 150 does not meet the safety criterion. In other words, the vehicles are not allowed to access and move along the vehicle zone 150.

In other words, the processing circuitry 102 determines that the possibility satisfies a safety criterion by determining that one or more similarities satisfies the safety criterion.

The safety criterion may thus be a condition that the vehicles must move in the same direction along the single vehicle lane 160.

Another type of safety criterion may be that an estimated speed difference between the vehicles is within a predetermined speed range. As used herein, the term speed difference between two vehicles typically refers to the absolute numerical difference in their speeds. It indicates how much faster one vehicle is moving compared to the other, without considering the direction of their motion. It is a scalar quantity and does not take into account the directions of the vehicles' velocities. The processing circuitry 102 is here configured to calculate how much faster or slower one vehicle is moving compared to another, without considering their direction of motion. For example, if vehicle 10a is traveling at 60 kilometers per hour, and vehicle 10b is traveling at 45 kilometers per hour, the speed difference between them is 15 kilometers per hour. This value represents the absolute difference in speed between the two vehicles.

Another type of safety criterion may be that an estimated relative speed between the vehicles is within a predetermined speed range. As used herein, the term relative speed between two vehicles considers both the speed and the direction of their motion. It provides information about how fast one vehicle is moving concerning the other, taking into account their respective velocities and directions. Relative speed is a vector quantity, meaning it has both magnitude and direction. The processing circuitry 102 is here configured to calculate how much faster or slower one vehicle is moving relative to the vehicle, considering their velocities and directions.

Another type of safety criterion may be that an estimated relative acceleration difference between the vehicles is within a predetermined acceleration range.

Another type of safety criterion may be that an estimated relative distance between the vehicles is within a predetermined distance range.

Another type of safety criterion may be that an estimated time gap between the vehicles is within a predetermined time period.

Another type of safety criterion may be that an estimated time to collision (if applicable) between the vehicles is within a predetermined time period.

The safety criterion may also be a combination of conditions, such as that the vehicles are estimated to move in the same direction and that the relative speed difference is within a predetermined speed range. In this context, the safety criterion contains a sub-set of safety conditions. Such data can be stored in a memory or in a database in communication with the processing circuitry 102.

It is also possible that the processing circuitry 102 is configured to determine that the possibility satisfies one or more a safety criterion, such as a set of safety criterion. One example of a set of safety criterion can be a first safety criterion that the vehicles must move in the same direction along the single vehicle lane 160 and a second safety criterion that the estimated relative speed difference between the vehicles, e.g. between the vehicle 10a and 10b, is within a predetermined speed range.

The safety criterion can be any one of a static condition, a set of static condition, a dynamic condition and a set of dynamic conditions.

Further, in this example, the processing circuitry 102 estimates whether a vehicle among the set of vehicles 10a, 10b can travel between the entrance 152 and exit 154 of the vehicle zone 150 without colliding with the other vehicle planning to travel between the entrance 152 and exit 154 of the vehicle zone 150.

By the above configuration of the processing circuitry 102 to estimate the possibility and determine that the possibility satisfies the safety criterion, the processing circuitry 102 establishes or identifies specific conditions, and compare the vehicle profiles of the vehicles to determine whether or not at least two vehicles can move through the vehicle zone 150 at the same time.

The data from the vehicle profiles may thus generally include one or more parameters that are comparative to each other. The vehicle profiles can thus be considered to form comparative measures for the processing circuitry 102 when it estimates the possibility of having a set of vehicles among the plurality of vehicles accessing the at least one vehicle zone and travelling along the single vehicle lane at the same time and then determines that the possibility satisfies a safety criterion, so as to allow the set of vehicles to travel through the at least one vehicle zone together.

The data making up the vehicle profiles can also be gathered from various vehicle sensors, from navigation systems of the vehicles, from data received from one or more control units of each vehicle, and/or from various technologies and systems for tracking and monitoring vehicles, such as GPS.

The processing circuitry 102 may also be configured to take other parameters into account, such as road conditions, visibility, weather, and other environmental factors that could affect the relative differences between the vehicles.

FIGS 3A to 3D illustrate another example of a number of vehicles travelling within a confined geographical area. As mentioned above for the example in FIGS. 1A to 1C and 2A to 2D, the computer system 100 comprises processing circuitry 102 configured to control movement of the vehicles within the confined geographical area. In this example, the number of vehicles is three, i.e. the vehicles 10a to 10c.

In FIGS 3A to 3D, the computer system 100 is configured to control movements of the vehicles 10a to 10c in the confined geographical area 200. Moreover, the computer system 100 comprises the processing circuitry 102. The processing circuitry 102 is configured to define the at least one vehicle path 110 within the confined geographical area 200. The processing circuitry 102 is also configured to define at least one vehicle path 110 within the confined geographical area 200 by the subset of static nodes 120a - 120n. The subset of static nodes 120a - 120n defines the topological representation of the at least one vehicle path 110. The at least one vehicle path 110 contains at least one vehicle zone 150. The at least one vehicle zone 150 has the entrance 152 and the exit 154. Moreover, the at least one vehicle zone 150 is delimited to the single vehicle lane 160. The processing circuitry 102 is further configured obtain real-time vehicle travelling profiles 180 of the plurality of vehicles 10a to 10c intended to travel in the at least one vehicle zone 150. Hence, the control system 100 is configured to acquire various vehicle data from, and about, each vehicle in the confined geographical area 200. The vehicle travelling profiles 180 contains travelling data 180, 182. The vehicle travelling profiles 180 can contain several different types of data. By way of example, the vehicle travelling profiles 180 comprises travelling data in the form of any one of driving directions of the adjacent vehicles 10a to 10n, scheduled routes of the adjacent vehicles 10a to 10n, relative distance between the adjacent vehicles 10a to 10n, relative time difference between the adjacent vehicles 10a to 10n, speed profile of the adjacent vehicles 10a to 10n, planned activities within the at least one vehicle zone unit, such as loading/unloading events.

The travelling data is here obtained from the plurality of the vehicles 10a to 10c. Hence, each one of the vehicles 10a, 10b, 10c comprises a corresponding processing circuitry configured to send travelling data related to the operation of vehicle. The corresponding processing circuitry of the vehicle is also configured to receive data from the processing circuitry 102 so as to update one or more parameters in the vehicle travelling profile, such as the speed of the vehicle.

Furthermore, the processing circuitry 102 is configured to estimate a possibility of having a set of vehicles, such as vehicles 10a, 10b, vehicles 10a, 10c and/or vehicles 10b, 10c, among the plurality of vehicles 10a to 10c accessing the at least one vehicle zone 150 and travelling along the single vehicle lane 160 at the same time. That is, the processing circuitry 102 is configured to estimate, based on the obtained real-time vehicle travelling profiles 180, a possibility of having a set of vehicles among the plurality of vehicles 10a to 10c accessing the at least one vehicle zone 150 and travelling along the single vehicle lane 160 at the same time.

Hereby, the processing circuitry 102 is configured to estimate a possibility of allowing the set of vehicles among the plurality of vehicles 10a to 10c to access the at least one vehicle zone and travel along the single vehicle lane at the same time. The processing circuitry 102 is also configured to determine that the possibility satisfies a safety criterion, so as to allow the set of vehicles to travel through the at least one vehicle zone 150 together.

In addition, the processing circuitry 102 is configured to feed motion commands to the set of vehicles for realizing their routes through the at least one vehicle zone 150 together.

In FIG. 3A, the vehicles 10a, 10b are in vehicle zone 146, while the vehicle 10c is in the vehicle zone 148. At this point, the processing circuitry 102 of the computer system 100 obtains real-time vehicle travelling profiles 180, 182 from the two vehicles 10a to 10c, which have received transportation missions to move between any one of the departure positions and the destination position 20a, 20b, 30a, 30b. In other words, the vehicles 10a, 10b, 10c all need to travel in the at least one vehicle zone 150 and through the single vehicle lane 160.

Ahead of the entrance to the at least one vehicle zone 150, the processing circuitry 102 of the computer system 100 estimate a possibility of having the vehicles 10a, 10b, 10c accessing the at least one vehicle zone 150 and travelling along the single vehicle lane 160 at the same time. That is, based on the obtained real-time vehicle travelling profiles, the processing circuitry 102 estimates a possibility of having the vehicles 10a, 10b, 10c to access the at least one vehicle zone 150 and then travel along the single vehicle lane 160 at the same time without causing any negative incidents or implications on each other's movements within the vehicle zone 150. By estimating the above possibility, it becomes possible to control movement of the vehicles 10a to 10c in the vehicle zone 150 in a more efficient and safe manner.

Moreover, ahead of the entrance to the at least one vehicle zone 150, the processing circuitry 102 of the computer system 100 determines whether or not the estimated possibility satisfies a safety criterion. If the estimated possibility is determined to be satisfied, i.e. meet the safety criterion, the vehicles 10a, 10b, 10c may be allowed to travel through the at least one vehicle zone 150 together.

In this manner, it becomes possible to reduce the time in the single vehicle lane 160, which may generally also mean that the time the vehicles stand still is reduced. This will contribute to an overall increase in productivity.

Then, if the estimated possibility satisfies the safety criterion, the processing circuitry 102 of the computer system 100 feed relevant motion commands to the vehicle 10a, 10b, 10c.

In addition, the vehicles 10a, 10b are viewed as one unit in the vehicle zone 150. As illustrated, the vehicles 10a, 10b also have a meeting vehicle 10c. However, since the vehicles 10a, 10b are moved together through the vehicle zone 150, the vehicles 10a, 10b are granted priority by the computer system 100 and will pass through the single lane 160 together, while the vehicle 10c must wait.

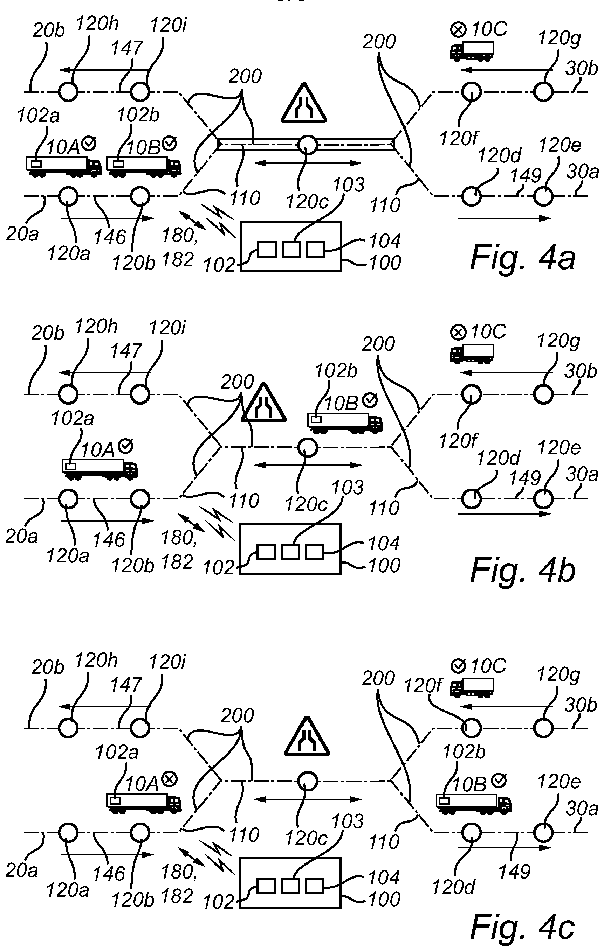

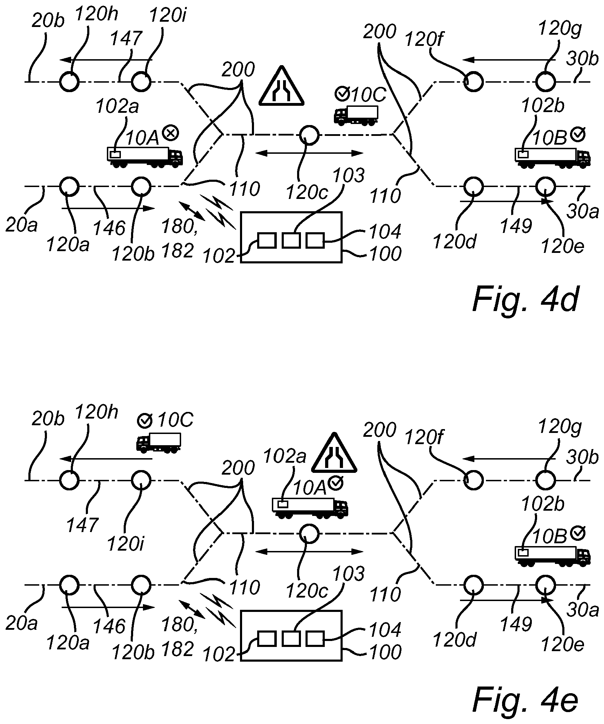

FIGS. 4A to 4E illustrate another example of a number of vehicles travelling within a confined geographical area. As mentioned above for the example in FIGS. 1A to 1C, the computer system 100 comprises processing circuitry 102 configured to control movement of the vehicles within the confined geographical area.

In FIGS 4A to 4E, the computer system 100 is configured to control movements of the vehicles 10a to 10c in the confined geographical area 200. Moreover, the computer system 100 comprises the processing circuitry 102. The processing circuitry 102 is configured to define the at least one vehicle path 110 within the confined geographical area 200. The processing circuitry 102 is also configured to define at least one vehicle path 110 within the confined geographical area 200 by the subset of static nodes 120a - 120n. The subset of static nodes 120a - 120n defines the topological representation of the at least one vehicle path 110. The at least one vehicle path 110 contains at least one vehicle zone 150. The at least one vehicle zone 150 has the entrance 152 and the exit 154. Moreover, the at least one vehicle zone 150 is delimited to the single vehicle lane 160. The processing circuitry 102 is further configured obtain real-time vehicle travelling profiles 180 of the plurality of vehicles 10a to 10c intended to travel in the at least one vehicle zone 150. Hence, the control system 100 is configured to acquire various vehicle data from, and about, each vehicle in the confined geographical area 200. The vehicle travelling profiles 180 contains travelling data 180, 182. The vehicle travelling profiles 180 can contain several different types of data. By way of example, the vehicle travelling profiles 180 comprises travelling data in the form of any one of driving directions of the adjacent vehicles, scheduled routes of the adjacent vehicles, relative distance between the adjacent vehicles, relative time difference between the adjacent vehicles, speed profiles of the adjacent vehicles, planned activities within the at least one vehicle zone unit, such as loading/unloading events.

The travelling data is here obtained from the plurality of the vehicles 10a to 10c. Hence, each one of the vehicles 10a, 10b, 10c comprises a corresponding processing circuitry configured to send travelling data related to the operation of vehicle. The corresponding processing circuitry of the vehicle is also configured to receive data from the processing circuitry 102 so as to update one or more parameters in the vehicle travelling profile, such as the speed of the vehicle.

Furthermore, the processing circuitry 102 is configured to estimate a possibility of having a set of vehicles, such as vehicles 10a, 10b, vehicles 10a, 10c and/or vehicles 10b, 10c, among the plurality of vehicles 10a to 10c accessing the at least one vehicle zone 150 and travelling along the single vehicle lane 160 at the same time. That is, the processing circuitry 102 is configured to estimate, based on the obtained real-time vehicle travelling profiles 180, a possibility of having a set of vehicles among the plurality of vehicles 10a to 10c accessing the at least one vehicle zone 150 and travelling along the single vehicle lane 160 at the same time.

Hereby, the processing circuitry 102 is configured to estimate a possibility of allowing the set of vehicles among the plurality of vehicles 10a to 10c to access the at least one vehicle zone and travel along the single vehicle lane at the same time. The processing circuitry 102 is also configured to determine that the possibility satisfies a safety criterion, so as to allow the set of vehicles to travel through the at least one vehicle zone 150 together.

In addition, the processing circuitry 102 is configured to feed motion commands to the set of vehicles for realizing their routes through the at least one vehicle zone 150 together.

In FIG. 4A, the vehicles 10a, 10b are in vehicle zone 146, while the vehicle 10c is in the vehicle zone 148. At this point, the processing circuitry 102 of the computer system 100 obtains real-time vehicle travelling profiles 180, 182 from the two vehicles 10a to 10c, which have received transportation missions to move between any one of the departure positions and the destination position 20a, 20b, 30a, 30b. In other words, the vehicles 10a, 10b, 10c all need to travel in the at least one vehicle zone 150 and through the single vehicle lane 160.

Ahead of the entrance to the at least one vehicle zone 150, the processing circuitry 102 of the computer system 100 estimate a possibility of having the vehicles 10a, 10b, 10c accessing the at least one vehicle zone 150 and travelling along the single vehicle lane 160 at the same time. That is, based on the obtained real-time vehicle travelling profiles, the processing circuitry 102 estimates a possibility of having the vehicles 10a, 10b, 10c to access the at least one vehicle zone 150 and then travel along the single vehicle lane 160 at the same time without causing any negative incidents or implications on each other's movements within the vehicle zone 150. By estimating the above possibility, it becomes possible to control movement of the vehicles 10a to 10c in the vehicle zone 150 in a more efficient and safe manner.

Moreover, ahead of the entrance to the at least one vehicle zone 150, the processing circuitry 102 of the computer system 100 determines whether or not the estimated possibility satisfies a safety criterion. If the estimated possibility is determined to be satisfied, i.e. meet the safety criterion, the vehicles 10a, 10b, 10c may be allowed to travel through the at least one vehicle zone 150 together.

In this manner, it becomes possible to reduce the time in the single vehicle lane 160, which may generally also mean that the time the vehicles stand still is reduced. This will contribute to an overall increase in productivity.

Then, if the estimated possibility satisfies the safety criterion, the processing circuitry 102 of the computer system 100 feed relevant motion commands to the vehicle 10a, 10b, 10c.

In addition, the vehicles 10a, 10b are here not viewed as one unit in the vehicle zone 150. Further, as illustrated, the vehicles 10a, 10b are meeting the vehicle 10c. Vehicle 10c could, however, be controlled to pass in between the vehicles 10a, 10b and create unnecessary waiting time for the vehicle 10a. Moreover, if the vehicles 10a, 10b are moved separately (not together) in the vehicle zone 150, the total time spent by any vehicle in the vehicle zone 150 may be twice the time taken by the vehicle 10a to traverse the vehicle zone 150. If the vehicles 10a, 10b on the other hand would have been moved together in the vehicle zone 150, the total time would have instead been half as the vehicles 10a, 10b would have traversed it together.

Optionally, the processing circuitry 102 is configured to determine, based on the obtained real-time vehicle travelling profiles 180, 182, a possibility of having a set of vehicles 10a to 10b among the plurality of vehicles 10a - 10n accessing the at least one vehicle zone 150 and travelling along the single vehicle lane 160 at the same time, by identifying one or more similarities between the vehicle travelling profiles of the set of vehicles. In addition, the processing circuitry 102 is configured to determine that the possibility satisfies the safety criterion by determining that the one or more similarities satisfies the safety criterion. One similarity could be that the adjacent vehicles intend to travel in the same direction through the vehicle zone. Another example could be that adjacent vehicles intend to travel at the same speed though the vehicle zone 150, or at a relatively similar vehicle speed that is within an allowable speed difference threshold (which can be set by the processing circuitry).

Optionally, the computer system 100 may also decide to estimate whether a vehicle, e.g. the vehicle 10a, among the set of vehicles 10a, 10b can travel between the entrance 152 and exit 154 of the vehicle zone 150 without colliding with the other vehicle 10b planning to travel between the entrance 152 and exit 154 of the vehicle zone 150.

Hence, the processing circuitry 102 is in this example configured to determine, based on the obtained real-time vehicle travelling profiles, the possibility of having a set of vehicles 10a, 10b among the plurality of vehicles 10a to 10n accessing the at least one vehicle zone 150 and travelling along the single vehicle lane 160 at the same time, further comprises to estimate whether a vehicle among the set of vehicles can travel between the entrance and exit of the vehicle zone without colliding with another vehicle among the plurality of vehicles planning to travel between the entrance and exit of the vehicle zone.

In some examples, the processing circuitry 102 is further configured to determine, based on the obtained real-time vehicle travelling profiles, that the possibility dissatisfies the safety criterion.

Determining whether the possibility dissatisfies the safety level can be provided in several different manners. By way of example, the processing circuitry 102 is configured to determine, based on the obtained real-time vehicle travelling profiles, that the possibility dissatisfies the safety criterion by identifying one or more differences between the vehicle travelling profiles of the set of vehicles 10a, 10b and then determine that the one or more differences dissatisfies the safety criterion. One difference could be that the adjacent vehicles 10a, 10b intend to travel in different directions through the vehicle zone 150. Another example could be that the adjacent vehicles 10a, 10b intend to travel at different speed though the vehicle zone 150.

By way of example, if the possibility dissatisfies the safety criterion, the processing circuitry 102 is further configured to estimate if one or more vehicle travelling profiles can be adjusted to satisfy the safety criterion. One example of a suitable adjustment would be to lower the speed for one of the vehicles 10a, 10b. Another adjustment would be to lower the speed of both vehicles 10a, 10b. Such data will be transmitted to the vehicles by the processing circuitry 102. Thereafter, a new evaluation of the possibility may be performed by the computer system 100.

In some examples, if the possibility satisfies the safety criterion, the processing circuitry 102 is further configured to compare the vehicle travelling profiles to identify possibilities for coupling at least two adjacent vehicles to each other to form a vehicle coupled combination; and feeding motion commands to the adjacent vehicles for realizing their routes through the at least one vehicle zone 150 together. In this example, the feeding motion commands further comprises commands for connecting the adj acent vehicles to form the vehicle coupled combination before entering the at least one vehicle zone. Vehicle platooning refers to a group of vehicles, typically consisting of two or more, traveling closely together on a roadway in a coordinated manner. Platooning vehicles communicate with each other and maintain consistent speeds and spacing to minimize aerodynamic drag, leading to fuel savings. Platooning systems often rely on vehicle-to-vehicle (V2V) communication, radar, lidar, and adaptive cruise control to maintain safe following distances and coordinate acceleration and braking.

In some examples, if the possibility satisfies the safety criterion, the processing circuitry 102 is further configured to compare the vehicle travelling profiles to identify possibilities for operating at least the set of vehicles in a coordinated manner forming a vehicle platooning arrangement; and feeding motion commands to the set of vehicles for realizing their routes through the at least one vehicle zone together, the feeding motion commands further comprising commands for coordinating the set of vehicles to form the vehicle platooning arrangement before entering the at least one vehicle zone. A vehicle convoy is a group of vehicles traveling together for a specific purpose, such as military operations, transportation of goods, or group travel. Convoys can vary in size and configuration and may or may not be equipped with advanced communication or automation technologies. The level of technology and automation in a convoy can vary widely. While some convoys may have advanced communication and coordination systems, others may consist of vehicles traveling together without sophisticated technology.

In some examples, if the possibility satisfies the safety criterion, the processing circuitry 102 is further configured to compare the vehicle travelling profiles to identify possibilities for operating at least the set of vehicles in a coordinated manner forming a vehicle convey arrangement; and feeding motion commands to the set of vehicles for realizing their routes through the at least one vehicle zone together, the feeding motion commands further comprising commands for coordinating the set of vehicles to form the vehicle convey arrangement before entering the at least one vehicle zone.

The vehicle travelling profiles 180, 182 can contain several different types of data. By way of example, each one of the vehicle travelling profile 180, 182 comprises travelling data in the form of any one of a driving direction of the vehicle, scheduled route(s) of the vehicle, current vehicle position of the vehicle, speed profile of the vehicle, destination of the vehicle, planned activities within the at least one vehicle zone unit, such as loading/unloading events.

Each one of the vehicle travelling profiles 180, 182 here also comprises travelling data in the form of any one of a driving direction of adjacent vehicles, scheduled routes of the adjacent vehicles, distance between the adjacent vehicles, time difference between the adjacent vehicle, speed profile of the adjacent vehicles, speed difference between adjacent vehicles, relative speed between adjacent vehicles, planned activities within the at least one vehicle zone unit, such as loading/unloading events.

In addition, or alternatively, by obtaining vehicle travelling profiles 180, 182 from a plurality of vehicles, the processing circuitry 102 is configured to determine any one of the following: driving directions of the plurality of vehicles, scheduled routes of plurality of vehicles, relative distance between the plurality of vehicles, relative time gaps between the plurality of vehicles, relative speed profile of the plurality of vehicles, speed difference between the plurality of vehicles, relative acceleration between the plurality of vehicles, planned activities by the plurality of vehicles within the at least one vehicle zone unit, such as loading/unloading events.

FIG. 5A is a flow chart of a method according to an example. More specifically FIG. 5A is an exemplary computer implemented method according to an example. The computer-implemented method 300 is intended for controlling movements of a plurality of vehicles 30a to 30n in the confined geographical area 200.

As illustrated, the computer-implemented method 300 comprises a step of defining S 1, by the processing circuitry of the computer system, at least one vehicle path within the confined geographical area by a subset of static nodes, wherein the subset of static nodes defines a topological representation of the at least one vehicle path, the at least one vehicle path containing at least one vehicle zone 150 with an entrance 152 and an exit 154, and further being delimited to a single vehicle lane 160.

Further, the computer-implemented method 300 comprises a step of obtaining S2 real-time vehicle travelling profiles of the plurality of vehicles intended to travel in the at least one vehicle zone, the vehicle travelling profiles containing travelling data.

Next, the computer-implemented method 300 comprises a step of determining S3, based on the obtained real-time vehicle travelling profiles, a possibility of having a set of vehicles among the plurality of vehicles accessing the at least one vehicle zone and travelling along the single vehicle lane 160 at the same time.

Moreover, the computer-implemented method 300 comprises a step of determining S5 that the possibility satisfies a safety criterion, so as to allow the set of vehicles to travel through the at least one vehicle zone together.

Finally, the computer-implemented method 300 comprises a step of feeding S6 motion commands to the set of vehicles for realizing their routes through the at least one vehicle zone together.

Optionally, as illustrated in FIG. 5A by a dashed box, the method may comprise a step of determining S4, based on the obtained real-time vehicle travelling profiles, that the possibility dissatisfies the safety criterion. In this manner, the method is configured to determine whether or not the possibility meets the safety criterion. It should be noted that step S4 can be performed before or after step S3. In some examples, the steps S3 and S4 are performed in parallel. Hence, the flow-chart in FIG. 5A is only a schematic overview of the order of the steps of the method 300.

FIG. 5B illustrates another example of the method. The computer-implemented method 300 is configured to control movements of a plurality of vehicles in a confined geographical area. Similar to the method in Fig. 5a, the computer-implemented method 300 of FIG. 5B comprises the step of defining S1, by the processing circuitry of the computer system, at least one vehicle path within the confined geographical area by a subset of static nodes, wherein the subset of static nodes defines a topological representation of the at least one vehicle path, the at least one vehicle path containing at least one vehicle zone 150 with an entrance 152 and an exit 154, and further being delimited to a single vehicle lane 160.

Further, the computer-implemented method 300 comprises the step of obtaining S2 real-time vehicle travelling profiles of the plurality of vehicles intended to travel in the at least one vehicle zone. As mentioned herein, each one of the vehicle travelling profiles contains travelling data of the respective vehicle, including e.g. vehicle position, vehicle speed, destination etc.

Next, the computer-implemented method 300 comprises the step of determining S3, based on the obtained real-time vehicle travelling profiles, a possibility of having a set of vehicles among the plurality of vehicles accessing the at least one vehicle zone and travelling along the single vehicle lane 160 at the same time.

In FIG. 5B, the step of determining S3 the possibility of having a set of vehicles among the plurality of vehicles accessing the at least one vehicle zone and travelling along the single vehicle lane 160 at the same time, further comprises a step of identifying S31 one or more similarities between the vehicle travelling profiles of the set of vehicles, and wherein determining that the possibility satisfies a safety criterion further comprises determining S51 that the one or more similarities satisfies the safety criterion.

In addition, or alternatively, the method of FIG. 5B further comprises estimating S32 whether a vehicle among the set of vehicles can travel between the entrance and exit of the vehicle zone without colliding with another vehicle among the plurality of vehicles planning to travel between the entrance and exit of the vehicle zone.

Also, in FIG. 5B, the method further comprises a step of determining S4, based on the obtained real-time vehicle travelling profiles, that the possibility dissatisfies the safety criterion.

In this example, the step of determining that the possibility dissatisfies the safety criterion, further comprises a step of identifying S41 one or more differences between the vehicle travelling profiles of the set of vehicles 10a to 10b, and further a step of determining S42 that the one or more differences dissatisfies the safety criterion.

Moreover, if the possibility dissatisfies the safety criterion, the method further comprising a step of estimating S43 if one or more vehicle travelling profiles can be adjusted to satisfy the safety criterion. By way of example, a suitable adjustment would be to lower the speed for one of the vehicles, or for one or more of the vehicles. Such data will be transmitted to the vehicle by the processing circuitry 102. Accordingly, the method here further comprises a step S44 of adjusting at least one parameter in at least one of the vehicle travelling profiles 180, 182 of at least one vehicle among the set of vehicles 10a, 10b. Such parameter is e.g. the speed of the vehicle 10b.

Next, the computer-implemented method 300 comprises the step of determining S5 that the possibility satisfies the safety criterion, so as to allow the set of vehicles to travel through the at least one vehicle zone together.

Finally, the computer-implemented method 300 comprises the step of feeding S6 motion commands to the set of vehicles for realizing their routes through the at least one vehicle zone together.

Further details of one example of a computer system that can be used as the computer system 100 will now be described in relation to FIG. 6

FIG. 6 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system 100 for controlling movements of a plurality of vehicles 10a to 10n in a confined geographical area 200, the computer system comprising processing circuitry 102 configured to: define at least one vehicle path 110 within the confined geographical area by a subset of static nodes 120a - 120n, wherein the subset of static nodes defines a topological representation of the at least one vehicle path, the at least one vehicle path containing at least one vehicle zone 150 with an entrance 152 and an exit 154, and further being delimited to a single vehicle lane 160; obtain real-time vehicle travelling profiles 180 of the plurality of vehicles intended to travel in the at least one vehicle zone, the vehicle travelling profiles containing travelling data 180, 182; determine, based on the obtained real-time vehicle travelling profiles, a possibility of having a set of vehicles among the plurality of vehicles accessing the at least one vehicle zone and travelling along the single vehicle lane 160 at the same time; determine that the possibility satisfies a safety criterion, so as to allow the set of vehicles to travel through the at least one vehicle zone together; and feed motion commands to the set of vehicles for realizing their routes through the at least one vehicle zone together.

Example 2: The computer system of example 1, wherein determine, based on the obtained real-time vehicle travelling profiles, a possibility of having a set of vehicles among the plurality of vehicles accessing the at least one vehicle zone and travelling along the single vehicle lane at the same time, further comprises to identify one or more similarities between the vehicle travelling profiles of the set of vehicles, and determine that the possibility satisfies a safety criterion further comprises to determine that the one or more similarities satisfies the safety criterion.

Example 3: The computer system of example 1 or example 2, wherein determine, based on the obtained real-time vehicle travelling profiles, a possibility of having a set of vehicles among the plurality of vehicles accessing the at least one vehicle zone and travelling along the single vehicle lane at the same time, further comprises to estimate whether a vehicle among the set of vehicles can travel between the entrance and exit of the vehicle zone without colliding with another vehicle among the plurality of vehicles planning to travel between the entrance and exit of the vehicle zone.

Example 4: The computer system of any examples 1-3, wherein the processing circuitry is further configured to determine, based on the obtained real-time vehicle travelling profiles, that the possibility dissatisfies the safety criterion.

Example 5: The computer system of example 4, wherein determine, based on the obtained real-time vehicle travelling profiles, that the possibility dissatisfies the safety criterion, further comprises to identify one or more differences between the vehicle travelling profiles of the set of vehicles and determine that the one or more differences dissatisfies the safety criterion.

Example 6: The computer system of example 4 or example 5, wherein, if the possibility dissatisfies the safety criterion, the processing circuitry is further configured to estimate if one or more vehicle travelling profiles can be adjusted to satisfy the safety criterion.

Example 7: The computer system of any examples 4-6, wherein, if the possibility satisfies the safety criterion, the processing circuitry is further configured to compare the vehicle travelling profiles to identify possibilities for coupling at least two adjacent vehicles to each other to form a vehicle coupled combination; and feeding motion commands to the adjacent vehicles for realizing their routes through the at least one vehicle zone together, the feeding motion commands further comprising commands for connecting the adjacent vehicles to form the vehicle coupled combination before entering the at least one vehicle zone.

Example 8: The computer system of any examples 1-7, wherein the vehicle travelling profiles comprises travelling data in the form of any one of driving directions of the adjacent vehicles, scheduled routes of the adjacent vehicles, distance between the adjacent vehicles, time between the adjacent vehicle, speed profile of the adjacent vehicles, planned activities within the at least one vehicle zone unit, such as loading/unloading events.

Example 9: The computer system of any examples 1-8, wherein the vehicle path within the confined geographical area is defined by a subset of static nodes using a route optimizing algorithms.

Example 10: The computer system of example 9, wherein the route optimizing algorithms is any one of a Djikstra's algorithm and A*.

Example 11: A vehicle 1 comprising the computer system of any of examples 1-10.

Example 12: A computer-implemented method 300 for controlling movements of a plurality of vehicles in a confined geographical area, the computer-implemented method comprising: defining S 1, by processing circuitry of a computer system, at least one vehicle path within the confined geographical area by a subset of static nodes, wherein the subset of static nodes defines a topological representation of the at least one vehicle path, the at least one vehicle path containing at least one vehicle zone 150 with an entrance 152 and an exit 154, and further being delimited to a single vehicle lane 160; obtaining S2 real-time vehicle travelling profiles of the plurality of vehicles intended to travel in the at least one vehicle zone, the vehicle travelling profiles containing travelling data; determining S3, based on the obtained real-time vehicle travelling profiles, a possibility of having a set of vehicles among the plurality of vehicles accessing the at least one vehicle zone and travelling along the single vehicle lane at the same time; determining S5 that the possibility satisfies a safety criterion, so as to allow the set of vehicles to travel through the at least one vehicle zone together; and feeding S6 motion commands to the set of vehicles for realizing their routes through the at least one vehicle zone together.

Example 13: The method of example 12, wherein determining a possibility of having a set of vehicles among the plurality of vehicles accessing the at least one vehicle zone and travelling along the single vehicle lane at the same time, further comprises identifying S31 one or more similarities between the vehicle travelling profiles of the set of vehicles, and wherein determining that the possibility satisfies a safety criterion further comprises determining that the one or more similarities satisfies the safety criterion.

Example 14: The method of example 12 or example 13, wherein determining a possibility of having a set of vehicles among the plurality of vehicles accessing the at least one vehicle zone and travelling along the single vehicle lane at the same time, further comprises estimating S32 whether a vehicle among the set of vehicles can travel between the entrance and exit of the vehicle zone without colliding with another vehicle among the plurality of vehicles planning to travel between the entrance and exit of the vehicle zone.

Example 15: The method of any examples 12-14, further comprising determining S4, based on the obtained real-time vehicle travelling profiles, that the possibility dissatisfies the safety criterion.

Example 16: The method of example 15, wherein determining that the possibility dissatisfies the safety criterion, further comprises identifying S41 one or more differences between the vehicle travelling profiles of the set of vehicles and further determining S42 that the one or more differences dissatisfies the safety criterion.

Example 17: The method of example 15 or example 16, wherein, if the possibility dissatisfies the safety criterion, the method further comprising estimating S43 if one or more vehicle travelling profiles can be adjusted to satisfy the safety criterion.

Example 18: A computer program product comprising program code for performing, when executed by the processing circuitry of any of examples 1-10, the method of any of examples 12 to 17.

Example 19: A non-transitory computer-readable storage medium comprising instructions, which when executed by the processing circuitry of any of examples 1-10, cause the processing circuitry to perform the method of any of examples 12 to 17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for controlling movements of a plurality of vehicles (10a to 10n) in a confined geographical area (200), the computer system comprising processing circuitry (102) configured to:
- define at least one vehicle path (110) within the confined geographical area by a subset of static nodes (120a - 120n), wherein the subset of static nodes defines a topological representation of the at least one vehicle path, the at least one vehicle path containing at least one vehicle zone (150) with an entrance (152) and an exit (154), and further being delimited to a single vehicle lane (160);
- obtain real-time vehicle travelling profiles (180) of the plurality of vehicles intended to travel in the at least one vehicle zone, the vehicle travelling profiles containing travelling data (180, 182);
- estimate, based on the obtained real-time vehicle travelling profiles, a possibility of having a set of vehicles among the plurality of vehicles accessing the at least one vehicle zone and travelling along the single vehicle lane at the same time;
- determine that the possibility satisfies a safety criterion, so as to allow the set of vehicles to travel through the at least one vehicle zone together; and
- feed motion commands to the set of vehicles for realizing their routes through the at least one vehicle zone together.

2. The computer system of claim 1, wherein estimate, based on the obtained real-time vehicle travelling profiles, a possibility of having a set of vehicles among the plurality of vehicles accessing the at least one vehicle zone and travelling along the single vehicle lane at the same time, further comprises to identify one or more similarities between the vehicle travelling profiles of the set of vehicles, and determine that the possibility satisfies a safety criterion further comprises to determine that the one or more similarities satisfies the safety criterion.

3. The computer system of claim 1 or claim 2, wherein estimate, based on the obtained real-time vehicle travelling profiles, a possibility of having a set of vehicles among the plurality of vehicles accessing the at least one vehicle zone and travelling along the single vehicle lane at the same time, further comprises to estimate whether a vehicle among the set of vehicles can travel between the entrance and exit of the vehicle zone without colliding with another vehicle among the plurality of vehicles planning to travel between the entrance and exit of the vehicle zone.

4. The computer system of any claims 1-3, wherein the processing circuitry is further configured to determine, based on the obtained real-time vehicle travelling profiles, that the possibility dissatisfies the safety criterion.

5. The computer system of claim 4, wherein, if the possibility dissatisfies the safety criterion, the processing circuitry is further configured to estimate if one or more vehicle travelling profiles can be adjusted to satisfy the safety criterion.

6. The computer system of any claims 1-5, wherein, if the possibility satisfies the safety criterion, the processing circuitry is further configured to compare the vehicle travelling profiles to identify possibilities for coupling at least two adjacent vehicles to each other to form a vehicle coupled combination; and feeding motion commands to the adjacent vehicles for realizing their routes through the at least one vehicle zone together, the feeding motion commands further comprising commands for connecting the adjacent vehicles to form the vehicle coupled combination before entering the at least one vehicle zone.

7. The computer system of any claims 1-6, wherein the vehicle travelling profiles comprise travelling data in the form of any one of driving directions of the plurality of vehicles, scheduled routes of the plurality of vehicles, distance between the plurality of vehicles, relative time gaps between the plurality of vehicles, relative speed between the plurality of vehicles, speed differences between the plurality of vehicles, relative acceleration between the plurality of vehicles, planned activities by the plurality of vehicles within the at least one vehicle zone unit, such as loading/unloading events.

8. The computer system of any claims 1-7, wherein the vehicle path within the confined geographical area is defined by a subset of static nodes using a route optimizing algorithms.

9. The computer system of any claims 1-8, wherein the safety criterion is any one of the following: the set of vehicles travels in the same direction, an estimated speed difference between the set of vehicles is within a predetermined speed range, an estimated relative speed between the set of vehicles is within a predetermined range, an estimated relative acceleration between the vehicles is within a predetermined acceleration range, an estimated relative distance between the set of vehicles is within a predetermined distance range, an estimated time gap between the set of vehicles is within a predetermined time period, and an estimated time to collision between the set of vehicles is within a predetermined time period.

10. A vehicle (1) comprising the computer system of any of claims 1-9.

11. A computer-implemented method (300) for controlling movements of a plurality of vehicles in a confined geographical area, the computer-implemented method comprising:
- defining (S 1), by processing circuitry of a computer system, at least one vehicle path within the confined geographical area by a subset of static nodes, wherein the subset of static nodes defines a topological representation of the at least one vehicle path, the at least one vehicle path containing at least one vehicle zone (150) with an entrance (152) and an exit (154), and further being delimited to a single vehicle lane (160);
- obtaining (S2) real-time vehicle travelling profiles of the plurality of vehicles intended to travel in the at least one vehicle zone, the vehicle travelling profiles containing travelling data;
- estimating (S3), based on the obtained real-time vehicle travelling profiles, a possibility of having a set of vehicles among the plurality of vehicles accessing the at least one vehicle zone and travelling along the single vehicle lane at the same time;
- determining (S5) that the possibility satisfies a safety criterion, so as to allow the set of vehicles to travel through the at least one vehicle zone together; and
- feeding (S6) motion commands to the set of vehicles for realizing their routes through the at least one vehicle zone together.

12. The method of claim 11, wherein estimating a possibility of having a set of vehicles among the plurality of vehicles accessing the at least one vehicle zone and travelling along the single vehicle lane at the same time, further comprises identifying (S31) one or more similarities between the vehicle travelling profiles of the set of vehicles, and wherein determining that the possibility satisfies a safety criterion further comprises determining that the one or more similarities satisfies the safety criterion.

13. The method of any claims 11-12, further comprising determining (S4), based on the obtained real-time vehicle travelling profiles, that the possibility dissatisfies the safety criterion.

14. The method of claim 13, wherein, if the possibility dissatisfies the safety criterion, the method further comprising estimating (S44) if one or more vehicle travelling profiles can be adjusted to satisfy the safety criterion.

15. A computer program product comprising program code for performing, when executed by the processing circuitry of any of claims 1-9, the method of any of claims 11 to 14.

16. A non-transitory computer-readable storage medium comprising instructions, which when executed by the processing circuitry of any of claims 1-9, cause the processing circuitry to perform the method of any of claims 11 to 14.
